# EUROPÄISCHE PATENTSCHRIFT

(11) **EP 2 361 784 B1**
(45) Veröffentlichungstag und Bekanntmachung des Hinweises auf die Patenterteilung: **18.07.2012**
(21) Anmeldenummer: 10188639.8
(22) Anmeldetag: 25.10.2010
(51) Int. Cl.: B41N 10/04, B32B 27/20, C08G 18/08, C08L 75/04

(54) **Drucktuch**
Printing blanket
Blanchet pour l'impression

(30) Priorität: 22.02.2010 DE 102010000505
(43) Veröffentlichungstag der Anmeldung: 31.08.2011
(73) Patentinhaber: ContiTech Elastomer-Beschichtungen GmbH, 30165 Hannover (DE)
(72) Erfinder: Löschner, Jens, 37120, Bovenden (DE); Kisser, Stefan, 37085, Göttingen (DE); Gerken, Andreas, 30161, Hannover (DE); Mach, Michael, 30853, Langenhagen (DE)
(74) Vertreter: Finger, Karsten

(56) Entgegenhaltungen:
- WO-A1-93/01003
- DE-B- 1 165 046
- JP-A- 2008 296 551
- US-A- 3 235 772

## Beschreibung

Die Erfindung betrifft ein mehrschichtiges elastisches Drucktuch mit zumindest einer Festigkeitsträgerlage, zumindest einer kompressiblen Zwischenschicht und zumindest einer elektrisch leitfähigen Kunststoffschicht. Ferner betrifft die Erfindung ein Verfahren zur Herstellung eines derartigen Drucktuches.

Drucktücher der eingangs genannten Art sind aus dem Stand der Technik bekannt. Der übliche Aufbau eines Drucktuches für den Digital- oder Offsetdruck besteht aus einer oder mehreren Festigkeitsträgerlagen, die ggf. über Haftschichten miteinander verbunden sind, einer kompressiblen, in der Regel Gaseinschlüsse aufweisenden Zwischenschicht und einer Deckplatte, die elektrisch leitfähig sein kann. Auf die Deckplatte können noch weitere Schichten, wie z. B. Lackschichten, aufgebracht sein.

Die Festigkeitsträgerlagen des Drucktuches können beispielsweise Gewebe oder Gewirke aus z. B. Baumwolle sein. Die Festigkeitsträgerlagen dienen der Einstellung des Dehnungsverhaltens des Drucktuches.

Die kompressible Zwischenschicht ermöglicht die Einstellung einer gezielten Komprimierbarkeit, die eine definierte Farbübertragung auf das zu bedruckende Material (Bedruckstoff) ermöglicht. Außerdem weist ein kompressibles Drucktuch eine hohe Beständigkeit gegen mechanische Deformationen (z. B. so genannte Papierknautscher) während des Druckvorganges auf. Die kompressible Zwischenschicht besteht in der Regel aus einer mikrozelligen Schicht aus Gummi oder einem gummiähnlichen Werkstoff.

Die Deckplatte, die unter anderem quellbeständig sein und ein gutes Farbübertragungsvermögen aufweisen muss, basiert in der Regel auf einer Synthesekautschukmischung, häufig Nitrilkautschukmischung.

Es ist z. B. aus der DE-AS 1 165 046, der JP 59-207291 A und der JP 59-207292 A bekannt, der Deckschicht elektrisch leitfähigen Ruß beizumischen. Für den Digitaldruck ist die elektrische Leitfähigkeit zumindest einer Drucktuchlage zwingend erforderlich, da die Farbe über elektrostatische Aufladung auf das Drucktuch aufgebracht wird. Es hat sich aber auch gezeigt, dass die elektrisch leitfähige Ausbildung der Deckschicht beim Offsetdruck zu einer Verbesserung des Druckbildes führt.

Bei derzeit auf dem Markt erhältlichen Drucktüchern für den Digitaldruck befindet sich auf der der Festigkeitsträgerlage abgewandten Seite der kompressiblen Zwischenschicht eine elektrisch leitfähige Deckgummierung aus Synthesekautschuk, der ein spezieller Ruß, z. B. Ketjenblack® EC-300J von der Firma Akzo Nobel, zugemischt ist, um eine definierte elektrische Leitfähigkeit zu erzielen. Die Dicke der Deckgummierung kann durch Schleifen kalibriert werden.

Um in der Deckschicht eine ausreichend hohe elektrische Leitfähigkeit zu erzielen, müssen relativ große Mengen an Ruß in die Mischung eingemischt werden und es muss eine relativ große Dicke der Deckschicht im Drucktuch, in der Regel mehr als 150 µm vorgesehen werden. Die Schicht wird über diverse Rakelbeschichtungsdurchläufe oder über Kalandrierverfahren erzeugt. Verfahrensbedingte Maßschwankungen (Dickenschwankungen) müssen durch Schleifen minimiert werden. Aufgrund der hohen Anforderungen der grafischen Industrie an die Oberflächengüte muss die Oberfläche häufig anschließend vor dem Einsatz oder der Weiterverarbeitung kostenintensiv gereinigt werden.

Weitere Drucktücher, die eine elektrisch leitfähige Deckschicht aufweisen, sind aus der US 3,235,772, der WO 93/01003 A1 und der JP 2008296551 A bekannt, wobei in diesen Schriften für die Erzeugung der elektrischen Leitfähigkeit neben Ruß auch Metallpartikel z. B. aus Silber vorgeschlagen werden.

Der Erfindung liegt nun die Aufgabe zu Grunde, ein Drucktuch mit zumindest einer ausreichend elektrisch leitfähigen Kunststoffschicht bereit zu stellen, welches sich einfach und kostengünstig herstellen lässt.

Gelöst wird diese Aufgabe erfindungsgemäß dadurch, dass die elektrisch leitfähige Kunststoffschicht als Füllstoff mit Metallen beschichtete Trägermaterialien aus elektrisch nicht leitendem Material enthält.

Unter dem Begriff Kunststoff sind dabei alle polymeren Werkstoffe gemäß DIN 7724 zu verstehen, insbesondere Elastomere, thermoplastische Elastomere und Thermoplaste.

Dadurch, dass die Kunststoffschicht als Füllstoff mit Metallen beschichtete Trägermaterialien aus elektrisch nicht leitendem Material aufweist, wobei der Füllstoff aufgrund seiner metallischen Eigenschaften eine hohe elektrische Leitfähigkeit besitzt, gelingt es, die recht dicke, rußgefiillte Gummideckschicht durch eine dünne, hoch leitfähige Kunststoffschicht zu ersetzen. Diese dünne Schicht muss nicht geschliffen werden.

Die dünnere, elektrisch leitfähige Kunststoffschicht erlaubt bei unveränderter Dicke des gesamten Drucktuches höhere Schichtdicken (Schichtstärken) der weiteren funktionalen Schichten, wodurch die Eigenschaften des Produktes insgesamt verbessert werden können.

Dadurch, dass das Schleifen der elektrisch leifähigen Schicht mit anschließender kostenintensiver Reinigung entfällt, wird das Herstellverfahren prozesstechnisch einfacher und kostengünstiger.

Zusätzlich erlaubt die Erfindung den Verzicht auf Ruß, so dass auch Drucktücher mit hellen, elektrisch leitfähigen Schichten erzeugt werden können.

Die erfindungsgemäße, elektrisch leitfähige Kunststoffschicht ermöglicht das Anlegen einer elektrischen Spannung, um das Drucktuch definiert aufladen zu können und sogar im Bedarfsfall direkt elektrisch beheizen zu können.

Bei den mit Metallen beschichteten Trägermaterialien aus elektrisch nicht leitendem Material kann es sich um solche handeln, die beispielsweise in der US 4,419,279 und der EP 1 284 278 A2 beschrieben werden. Die Trägermaterialien sind vorzugsweise mit Edelmetallen oder Edelmetalllegierungen beschichtet.

Um eine möglichst hohe elektrische Leitfähigkeit der Kunststoffschicht bei möglichst geringer Füllung und akzeptablen Kosten zu erzielen, hat es sich als vorteilhaft erwiesen, wenn der Füllstoff Silber oder Aluminium enthält.

Gemäß einer vorteilhaften Weiterbildung der Erfindung enthält die elektrisch leitfähige Kunststoffschicht als Füllstoff mit Metallen beschichtete Trägermaterialien aus elektrisch nicht leitendem Material, wobei die Trägermaterialien einen Kern aus Glas- oder Glashohlkugeln und eine auf dem Kern schalenförmig angeordnete, metallische Beschichtung aufweist.

Bei dem Bindemittel (Basismaterial) für die elektrisch leitfähige Schicht, das die den Füllstoff einbettende Matrix bildet, kann es sich um unterschiedlichste Zusammensetzungen polymerer Werkstoffe handeln. Denkbar sind beispielsweise Kautschukmischungslösungen mit den Füllstoffen. Vorzugsweise basiert die elektrisch leitfähige Kunststoffschicht jedoch auf einem Polyurethan als Bindemittel. Hiermit lassen sich besonders dünne elektrisch leitfähige Schichten erzeugen.

Die Polyurethane können dabei wässrige Systeme, wie sie in der EP 1 284 278 A2 beschrieben sind, eingesetzt werden. Möglich ist jedoch auch die Verwendung von Polyurethansystemen, die in Lösemitteln gelöst sind und einen Lösungsmittelgehalt von mehr als 10 Gew.-% aufweisen. Desweiteren ist auch denkbar, so genannte reaktive Polyurethan-High-Solid-Systeme mit einem Lösemittelgehalt von weniger als 20 Gew.-%, insbesondere von weniger als 10 Gew.-% als Bindemittel einzusetzen. Solche Systeme sind beispielsweise in der DE 10 2006 056 956 A1 und der EP 1 059 379 B1 beschrieben.

Besonders vorteilhaft ist es, wenn die elektrisch leitfähige Kunststoffschicht in der getrockneten bzw. ausgehärteten Form 15 bis 95 Gew.-%, vorzugsweise 30 bis 70 Gew.-%, des Füllstoffs aufweist. Es wird eine hohe elektrische Leitfähigkeit bei geringer Schichtdicke erreicht.

Gemäß einer vorteilhaften Weiterbildung der Erfindung weist die die elektrisch leitfähige Kunststoffschicht eine Dicke von weniger als 60 µm auf. Die gewonnene Dicke kann auf andere Schichten, beispielsweise die kompressible Schicht, verteilt werden und damit das gesamte Eigenschaftsbild des Drucktuches verbessert werden.

Die elektrisch leitfähige Kunststoffschicht kann gemäß einer Weiterbildung der Erfindung zumindest eine nach außen weisende, nicht elektrisch leitfähige Schicht aufweisen, dies gilt insbesondere für Anwendungen im Digitaldruckbereich.

Enthält die Festigkeitsträgerlage des Drucktuches ein Gewebe, ist es zur Optimierung der Produktqualität in Bezug auf die Oberflächenstruktur und -reinheit von Vorteil, wenn das Drucktuch eine das Gewebe abdeckende, nach außen weisende Rückseitenbeschichtung aufweist.

Die Erfindung betrifft ein Verfahren zur Herstellung des erfindungsgemäßen Drucktuches, welches einfach und kostengünstig durchzuführen ist. Dabei wird die elektrisch leitfähige Kunststoffschicht durch Drucken, Rakeln, Kalandrieren oder Lackieren auf den Drucktuchverbund aufgebracht. Dadurch lassen sich Schichtgewichte von 10 g/m² (bei Anwendung eines Druckverfahrens) bis 1000 g/m² einstellen, wobei ein Schichtgewichtsbereich von 20 bis 300 g/m² bevorzugt ist. Schichtgewichte von mehr als 1000 g/m² lassen sich erzielen, wenn mehrere elektrisch leitfähige Schichten miteinander verbunden werden.

Alternativ zu den vorgenannten Verfahren kann die elektrisch leitfähige Kunststoffschicht auch vorab als dünne Folie, insbesondere mit Polyurethan als Bindemittel, erzeugt werden, die dann mit den anderen funktionalen Schichten des Drucktuches zusammen geklebt (kaschiert) wird.

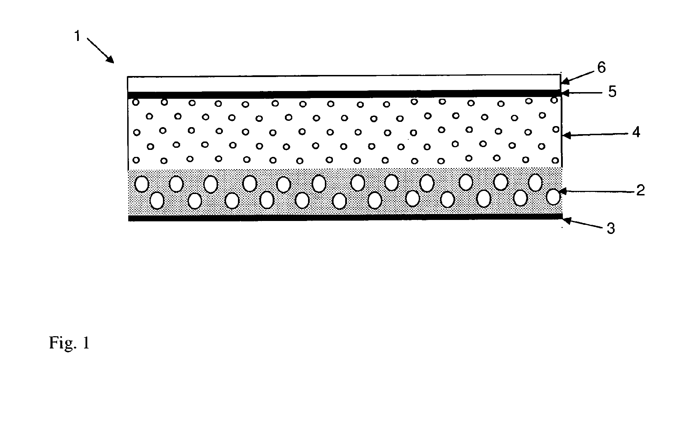

Anhand eines Ausführungsbeispieles soll die Erfindung näher erläutert werden, ohne auf dieses Beispiel beschränkt zu sein. Es zeigt
- Fig. 1: den schematischen Aufbau eines erfindungsgemäßen Drucktuches im Schnitt

Die Fig. 1 zeigt den Aufbau eines erfindungsgemäßen Drucktuches 1 für den Digitaldruck im Schnitt. Das Drucktuch 1 weist eine Festigkeitsträgerlage 2 aus einem Baumwollgewebe auf und ist an der Unterseite mit einer Rückseitenbeschichtung 3 versehen. Ober halb der Festigkeitsträgerlage 2 ist eine kompressible Zwischenschicht 4 angeordnet, die mit der Festigkeitsträgerlage 2 verklebt ist. Oberhalb der kompressiblen Zwischenschicht 4 ist die elektrisch leitfähige Kunststoffschicht 5 angeordnet, die aus der in der unten angegebenen Tabelle 1 dargestellten Zusammensetzung als Folie einer Dicke von 40 bis 50 µm erzeugt wurde und im Anschluss auf die kompressible Zwischenschicht 4 kaschiert wurde. Oberhalb der elektrisch leitfähigen Kunststoffschicht 5 befindet sich noch eine nicht elektrisch leitfähige Schicht 6, die beispielsweise auf Polyurethan oder Nitrilkautschuk basieren kann.

In der Tabelle 1 sind die Inhaltsstoffe und Mengenbereiche für die Mischungszusammensetzungen der elektrisch leitfähigen Kunststoffschicht 5 sowie ein spezielles Ausführungsbeispiel angegeben. Letzteres wurde zu Folien einer Dicke von 40 bis 50 µm verarbeitet und für das Drucktuch gemäß Fig. 1 verwendet.

**Tabelle 1**

| **Zusammensetzung** | **Mengenbereiche [Gew.-%]** | **spez. Beispiel [Gew.-%]** |
|---|---|---|
| wässrige Dispersion auf Polyurethan- oder Acrylatbasis mit 50 Gew.-% Feststoffanteil | 10-90 | 44,27^{a}) |
| Wasser | 0-50 | 8,86 |
| Entschäumer | 0-10 | 0,66 |
| Verdicker | 0-10 | 0,4 |
| Konservierungsmittel | 0-10 | 0,66 |
| Vernetzer | 0-10 | 0,66 |
| Füllstoff für elektrisch leitfähige Kunststoffschicht | 10-90 | 44,27^{b}) |
| Alterungsschutzmittel | 0-10 | 0,22 |

| | | |
|---|---|---|
| ^{a)} wässrige Dipersion auf der Basis von Polyurethan, Impranil^{®} DLP der Firma Bayer ^{b)} versilberte Glashohlkugeln, Conduct-O-Fil SH400S33 der Firma Potters Europe | | |

### Bezugszeichenliste

### (Teil der Beschreibung)

- 1: Drucktuch
- 2: Festigkeitsträgerlage
- 3: Rückseitenbeschichtung
- 4: kompressible Zwischenschicht
- 5: elektrisch leitfähige Kunststoffschicht
- 6: nicht elektrisch leitfähige Schicht

## Patentansprüche

1. Mehrschichtiges elastisches Drucktuch (1) mit zumindest einer Festigkeitsträgerlage (2), zumindest einer kompressiblen Zwischenschicht (4) und zumindest einer elektrisch leitfähigen Kunststoffschicht (5), **dadurch gekennzeichnet, dass** die elektrisch leitfähige Kunststoffschicht (5) als Füllstoff mit Metallen beschichtete Trägermaterialien aus elektrisch nicht leitendem Material enthält.

2. Mehrschichtiges elastisches Drucktuch (1) nach Anspruch 1, **dadurch gekennzeichnet, dass** der Füllstoff der elektrisch leitfähigen Kunststoffschicht (5) Silber oder Aluminium enthält.

3. Mehrschichtiges elastisches Drucktuch (1) nach Anspruch 1 oder 2, **dadurch gekennzeichnet, dass** die mit Metallen beschichteten Trägermaterialien aus elektrisch nicht leitendem Material einen Kern aus Glas- oder Glashohlkugeln und eine auf dem Kern schalenförmig angeordnete, metallische Beschichtung aufweisen.

4. Mehrschichtiges elastisches Drucktuch (1) nach zumindest einem der vorhergehenden Ansprüche, **dadurch gekennzeichnet, dass** die elektrisch leitfähige Kunststoffschicht (5) auf einem Polyurethan als Bindemittel basiert.

5. Mehrschichtiges elastisches Drucktuch (1) nach zumindest einem der vorhergehenden Ansprüche, **dadurch gekennzeichnet, dass** die elektrisch leitfähige Kunststoffschicht (5) in der getrockneten bzw. ausgehärteten Form 15 bis 95 Gew.-%, vorzugsweise 30 bis 70 Gew.-%, des Füllstoffs aufweist.

6. Mehrschichtiges elastisches Drucktuch (1) nach zumindest einem der vorhergehenden Ansprüche, **dadurch gekennzeichnet, dass** die elektrisch leitfähige Kunststoffschicht (5) eine Dicke von weniger als 60 µm aufweist.

7. Mehrschichtiges elastisches Drucktuch (1), insbesondere Drucktuch (1) für den Digitaldruck, nach zumindest einem der vorhergehenden Ansprüche, **dadurch gekennzeichnet, dass** es auf der elektrisch leitfähiges Kunststoffschicht (5) zumindest eine nach außen weisende, nicht elektrisch leitfähige Schicht (6) aufweist.

8. Mehrschichtiges elastisches Drucktuch (1) nach zumindest einem der vorhergehenden Ansprüche, **dadurch gekennzeichnet, dass** die Festigkeitsträgerlage (2) ein Gewebe enthält und das Drucktuch eine das Gewebe abdeckende, nach außen weisende Rückseitenbeschichtung (3) aufweist.

9. Verfahren zur Herstellung eines mehrschichtigen elastischen Drucktuches (1) nach zumindest einem der Ansprüche 1 bis 8, **dadurch gekennzeichnet, dass** die elektrisch leitfähige Kunststoffschicht (5) durch Drucken, Rakeln, Kalandrieren, Lackieren oder Verkleben aufgebracht wird.

## Claims

1. Multilayer resilient printing blanket (1) having at least one reinforcing layer (2), at least one compressible intermediate layer (4) and at least one electrically conductive plastic layer (5), **characterized in that** the electrically conductive plastic layer (5) contains reinforcing materials made of electrically non-conductive material coated with metals as filler.

2. Multilayer resilient printing blanket (1) according to Claim 1, **characterized in that** the filler of the electrically conductive plastic layer (5) contains silver or aluminium.

3. Multilayer resilient printing blanket (1) according to Claim 1 or 2, **characterized in that** the reinforcing materials made of electrically non-conductive material coated with metals have a core of glass or hollow glass spheres and a metallic coating arranged in the form of shells on the core.

4. Multilayer resilient printing blanket (1) according to at least one of the preceding claims, **characterized in that** the electrically conductive plastic layer (5) is based on a polyurethane as a binder.

5. Multilayer resilient printing blanket (1) according to at least one of the preceding claims, **characterized in that**, in the dried and cured form, the electrically conductive plastic layer (5) has 15 to 95% by weight, preferably 30 to 70% by weight, of the filler.

6. Multilayer resilient printing blanket (1) according to at least one of the preceding claims, **characterized in that** the electrically conductive plastic layer (5) has a thickness of less than 60 µm.

7. Multilayer resilient printing blanket (1), in particular a printing blanket (1) for digital printing, according to at least one of the preceding claims, **characterized in that** it has at least one non-electrically conductive layer (6) facing outwards on the electrically conductive plastic layer (5).

8. Multilayer resilient printing blanket (1) according to at least one of the preceding claims, **characterized in that** the reinforcing layer (2) contains a fabric, and the printing blanket has a reverse side coating (3) facing outwards and covering the fabric.

9. Method for producing a multilayer resilient printing blanket (1) according to at least one of Claims 1 to 8, **characterized in that** the electrically conductive plastic layer (5) is applied by printing, doctoring, calendering, varnishing or adhesive bonding.

## Revendications

1. Blanchet élastique multicouche (1) présentant au moins une couche (2) de renforts, au moins une couche intermédiaire compressible (4) et au moins une couche (5) de matière synthétique électriquement conductrice, **caractérisé en ce que**
la couche (5) en matière synthétique électriquement conductrice contient comme charge des matériaux de support en matériau électriquement non conducteur revêtus de métaux.

2. Blanchet élastique multicouche (1) selon la revendication 1, **caractérisé en ce que** la charge de la couche (5) en matière synthétique électriquement conductrice contient de l'argent ou de l'aluminium.

3. Blanchet élastique multicouche (1) selon les revendications 1 ou 2, **caractérisé en ce que** les matériaux de support en matériau électriquement non conducteur revêtus de métaux présentent une âme en billes de verre pleines ou creuses et un revêtement métallique disposé en forme de coquille sur l'âme.

4. Blanchet élastique multicouche (1) selon au moins l'une des revendications précédentes, **caractérisé en ce que** la couche (5) en matière synthétique électriquement conductrice est basée sur un polyuréthane servant de liant.

5. Blanchet élastique multicouche (1) selon au moins l'une des revendications précédentes, **caractérisé en ce que** la couche (5) en matière synthétique électriquement conductrice présente à l'état sec ou durci de 15 à 95 % en poids et de préférence de 30 à 70 % en poids de la charge.

6. Blanchet élastique multicouche (1) selon au moins l'une des revendications précédentes, **caractérisé en ce que** la couche (5) en matière synthétique électriquement conductrice présente une épaisseur inférieure à 60 µm.

7. Blanchet élastique multicouche (1), en particulier blanchet (1) pour impression numérique selon au moins l'une des revendications précédentes, **caractérisé en ce qu'**il présente au moins une couche (6) électriquement non conductrice orientée vers l'extérieur et placée sur la couche (5) en matière synthétique électriquement conductrice.

8. Blanchet élastique multicouche (1) selon au moins l'une des revendications précédentes, **caractérisé en ce que** la couche (2) de renforts contient un tissu et **en ce que** le blanchet présente un revêtement dorsal (3), tourné vers l'extérieur, et qui recouvre le tissu.

9. Procédé de fabrication d'un blanchet élastique multicouche (1) selon au moins l'une des revendications 1 à 8, **caractérisé en ce que** la couche (5) en matière synthétique électriquement conductrice est appliquée par impression, raclage, calendrage, laquage ou collage.
